(19) Europäisches Patentamt
European Patent Office
Office européen des brevets

(11) Publication number: 0 091 785 B1

(12) EUROPEAN PATENT SPECIFICATION

(45) Date of publication of patent specification: 14.03.90

(51) Int. Cl.$^5$: D 01 F 1/06, D 01 F 6/04, C 08 L 23/02

(21) Application number: 83301947.4

(22) Date of filing: 06.04.83

# (54) Improvements in or relating to melt dyeing polyfins.

(30) Priority: 06.04.82 GB 8210208
29.09.82 GB 8227801

(43) Date of publication of application:
19.10.83 Bulletin 83/42

(45) Publication of the grant of the patent:
14.03.90 Bulletin 90/11

(84) Designated Contracting States:
AT BE CH DE FR GB IT LI LU NL SE

(56) References cited:
EP-A-0 012 241
EP-A-0 050 501
US-A-3 427 296
US-E- 28 167

(73) Proprietor: PFE Limited
Elisabeth House Shroggs Road
Halifax, HX3 5HL (GB)

(72) Inventor: Slack, Philip Trevor Upper Rooks Hall
Norwood Green Hill Lightcliffe
Halifax West Yorkshire, HX3 8QZ (GB)

(74) Representative: Oulton, Richard John et al
H.L. COTTRELL & CO. Kings Building South
Church Side
Hull North Humberside HU1 1RR. (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the melt colouration of polyolefins and a method of improving the melt dye-ability of polyolefins especially in filamentous form.

It is well known that adequately colouring polyolefin homopolymers such as polyethylene and polypropylene to produce intense transparent shades presents difficulties. The difficulties have been attributed at least in part to the inertness—i.e. lack of chemical re-activity, of these polymers. Surface colouration has been achieved in the printing art by re-activating the surface—e.g. of polyethylene, *inter alia* by flame treatment which, it has been suggested, generates active sites enabling components of colourant compositions to be keyed onto the surface more or less permanently.

Such inertness may account for the apparent inability of polyolefins to acquire intense shades using conventional textile dyeing techniques. The problem is most apparent with films and filaments which, having minute thickness, exhibit little or no colour or dyeing. Consequently, substantial colouration can only be achieved mechanically by means such as melt pigmentation, which mainly produces opaque effects since generally it has been found that transparent dyestuffs are not fast to light or wet or dry rubbing when incorporated into polyolefins.

In thin films and filaments physical impairment can arise through heavy pigmentation by insoluble opaque pigments, causing film/filament weakness and also blockage of spinerettes resulting in broken filaments.

It has been found that polyolefins homopolymers, especially polypropylene, can be made dye receptive by admixture with other materials.

Accordingly, the present invention proposes a method for producing a uniformly coloured thermoplastic composition including a polyolefin homopolymer, a further polymeric material other than a polyolefin homopolymer in intimate admixture with the polyolefin homopolymer nad at least one dye dispersed throughout said material which method comprises dry admixture of the ingredients at a temperature above the softening point of the polyolefin.

Preferably, said polymeric material other than a polyolefin homopolymer is an acrylic resin, a polymer of an unsaturated hydrocarbon, a polycarbonate, a polyamide, a polyurethane or a polycaprolactone or a mixture thereof. The polymer material may be one consisting of a homopolymer or one consisting of a copolymer.

Materials comprising a polymer containing a substituted or unsubstituted amine radical, are suitable for use with acid dyes. Thus, a polyamide or an alkylamine acrylate polymer may be used with an acid dye. Otherwise, the materials are suitable for use with disperse or solvent dyes. Hereinbelow for convenience, the materials will be referred to as activators.

Proportions of activator to polyolefin may vary widely to achieve a satisfactory effect—e.g. from 1 to 15% by weight based on the weight of the polyolefin but 2 to 4% on that weight basis has been found efficacious other than for polycaprolactones.

Exemplary activators for use in the present invention are shown hereinbelow along with suitable dyes.

| Activator: | Type of dyestuff: |
|---|---|
| (A) Copolymer of ethylene & methylaminoethyl methacrylate | Heat stable, acid dyestuffs, e.g. Luramid(TM) by B.A.S.F., Filamid(TM) by Ciba Geigy |
| (B) Nylon 6 (Ultramid(TM) B.4. B.A.S.F.) | Heat stable, acid dyestuffs, e.g. Luramid by B.A.S.F., Filamid by Ciba Geigy |
| (C) Styrene—Acrylonitrile-copolymers e.g. Luran(TM) 378 P B.A.S.F. | Disperse & solvent dyestuffs |
| (D) Acrylonitrile-styrene-acrylic ester copolymers e.g. (Luran(TM) 'S776S') B.A.S.F. | Disperse & solvent dyestuffs |
| (E) Butadiene-styrene-polymer ('K' Resin Phillips Petroleum) | Disperse & solvent dyestuffs |
| (F) Polystyrene (Shell K524) | Disperse & solvent dyestuffs |
| (G) Polymethylmethacrylate (Plexiglas(TM) 7N) | Disperse & solvent dyestuffs |
| (H) Polycarbonate (Makrolon(TM) 2800 Bayer) | Disperse & solvent dyestuffs |
| (I) Acrylonitrile-butadiene-styrene copolymers (Terluvan(TM) 887 T B.A.S.F.) | Disperse & solvent dyestuffs |
| (J) Thermoplastics polyurethane (Estane(TM) B. F. Goodrich) based on polyester, polyether or polycaprolactone | Disperse & solvent dyestuffs |
| (K) Polycaprolactones | Disperse & solvent dyestuffs |

The polycaprolactone is preferably derived from ε-caprolactone—i.e. 2-oxepanone.

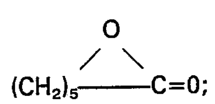

and bears free hydroxyl groups terminating side chains. A preferred commercially available form of polycaprolactone is sold under the Trade Mark "Capa 601m".

The polycaprolactone may have a mean molecular weight of from 250 to 45,000 and may be of straight or branched chain structure. Its physical form may be of a liquid, paste, waxy or tough polymeric nature depending upon the structure, mean molecular weight and hydroxyl value. Thus, the polycaprolactones with higher hydroxyl values are liquid or pasty and have relatively low mean molecular weight, whereas the polycaprolactones with lower hydroxyl values and relatively high mean molecular weight are wax-like and in the extreme are tough, clear plastics materials exhibiting *per se* good impact strength.

An advantage of the polycaprolactones is their relatively low softening point which facilitates mechanical handling thereof.

Preferably, the polycaprolactones used in the present invention have a relatively high mean molecular weight.

The relative proportions of polyolefin and polycaprolactones used can vary within wide limits but upper limits will be controlled by the cost of the latter.

It has been found surprisingly that relatively low concentrations of polycaprolactones in polyolefins can improve the melt dye-ability of the thermoplastics material. For instance 0.5, 1.0 or 1.5 parts polycaprolactone per 100 parts of polypropylene.

Preferably the dyestuff for use with a polycaprolatone is a disperse dyestuff, but solvent dyestuffs may be employed in some cases.

A composition of the present invention may be prepared for extrusion by softening the polyolefin and mixing in the activator as by folding. In the case of the polycaprolactones, particularly the good solvent powers thereof benefit the process of mixing and if heat is the means of softening the polyolefin, mixing can often be conducted at a lower temperature than is the case with other materials.

Alternatively, the activator may be incorporated with the colourant by mixing, as by folding, the activator and colourant into the softened polyolefin at slightly elevated temperature. Or, the activator, if solid at room temperature, especially in the case of a polycaprolactone, may be extruded with the dye and the solid extrusion reduced to finely divided form—e.g. by grinding, and then intimately admixed with the polyolefin and extruded therewith.

The melt dyed thermoplastics materials whether in bulk or in discrete form—e.g. chips or beads, exhibit greater intensity of colour than heretofore achieved. The intensity of colour is seemingly enhanced when the thermoplastics material is formed into filaments or sheets. Filaments so coloured have a cleanliness and brilliance of shade not obtainable with opaque pigments.

Preferably, the melt dyed thermoplastics material is formed into filaments. The filaments may be composed into threads or yarn, and woven or tufted into carpets.

Advantageously for even brighter effects, the filaments are of non-circular cross-sectional shape. The cross-sectional outline may be of regular or irregular pattern.

Preferably, the cross-sectional shape of the filaments is triangular and more particularly equilaterally triangular. It has been found that so-shaping the cross-section results in increased total internal reflection within a filament thus apparently enhancing further the intensity of the colouration especially in threads comprising such filaments.

Good colour fastness and rub resistance are achieved and properties of the polyolefins are not apparently impaired.

The present invention will now be further described with reference to the following Examples in which the equipment used to produce fibres was the same.

It consisted of a 45 mm extruder with a 20:1 length to diameter ratio of the screw and barrel. The extruder was connected to a fibre spinning head fitted with a spinnerette. The line consisted of rollers for drawing and stretching the fibre tow produced together with means for crimping and cutting the fibre staple.

The temperature profile of the extruder barrel was:—

Zone 1=170°C Zone 2=200°C Zone 3=205°C Zone 4=215°C. The extension tube to the head was at 215°C and, in Examples 1 to 10, the spinning head was maintained at 220°C. In the spinerette were 2110 circular holes of 0.5 mm diameter. The speed of the extruder was adjusted until 16.5 dtex (15 denier) fibres were produced after stretching with a ratio of 3.1:1.

Example 1

To 100 parts of Shell Grade SY6500 11 M.F.I. polypropylene resin was added 2% in granular form of a copolymer of ethylene and methylaminoethyl methacrylate and 0.5% of a U.V. stabilizer Tinuvin 327 (Ciba Geigy). The above mix was divided into 12 lots of equal size and to each in turn was added 0.5% of the following acid dyestuffs sold under the trade name Luramid by B.A.S.F. and Filamid by Ciba Geigy. The resultant polymer and dyestuff mix was then charged to the extruder and extruded into melt dye fibres. In each case strongly and transparently coloured fibres were produced which had good fastness to light, wet and dry rubbing and shampoo tests.

| | | | |
|---|---|---|---|
| Lot A1 | Mix plus | 0.5% | Luramid Yellow R (BASF) Acid Dyestuff |
| Lot A2 | Mix plus | 0.5% | Luramid Red B (BASF) Acid Dyestuff |
| Lot A3 | Mix plus | 0.5% | Luramid Blue RR (BASF) Acid Dyestuff |
| Lot A4 | Mix plus | 0.5% | Filamid Yellow 4G (Ciba Geigy) Acid Dyestuff |
| Lot A5 | Mix plus | 0.5% | Filamid Yellow 2732 (Ciba Geigy) Acid Dyestuff |
| Lot A6 | Mix plus | 0.5% | Filamid Orange 1060 (Ciba Geigy) Acid Dyestuff |
| Lot A7 | Mix plus | 0.5% | Filamid Scarlet 2225 (Ciba Geigy) Acid Dyestuff |
| Lot A8 | Mix plus | 0.5% | Filamid Red 1008 (Ciba Geigy) Acid Dyestuff |
| Lot A9 | Mix plus | 0.5% | Filamid Red 841 (Ciba Geigy) Acid Dyestuff |
| Lot A10 | Mix plus | 0.5% | Filamid Red 1020 (Ciba Geigy) Acid Dyestuff |
| Lot A11 | Mix plus | 0.5% | Filamid Bordeaux 2690 (Ciba Geigy) Acid Dyestuff |
| Lot A12 | Mix plus | 0.5% | Filamid Blue 2947 (Ciba Geigy) Acid Dyestuff |

Example 2

To 100 parts of polypropylene granules were added 2 parts of Nylon 6 B.A.S.F. (Ultramid(TM) B4) and 0.5% U.V. stabilizer Tinuvin(TM) 327 (Ciba Geigy). This blend was divided into 12 lots and mixed with the same dyestuffs as listed A1—A12.

The resultant fibres were brilliantly and transparently coloured and had good fastness properties to light, wet and dry rubbing and shampoo tests.

Example 3

To a mix of polypropylene, 2 parts styrene acrylonitrile plus 0.5% Tinuvin(TM) 327 U.V. stabilizer, copolymer ('Luran'(TM) grade 378 P (B.A.S.F.)) was mixed with the following dyestuffs and extruded into fibres. Brilliantly and transparently coloured fibres resulted which had good fastness properties to light, wet and dry rubbing and shampoo tests.

C1 Solvent Yellow 93—Coluor Index Part 1
C2 Solvent Yellow 128
C3 Solvent Yellow 129
C4 Solvent Red 138
C5 Solvent Red 139
C6 Solvent Blue 121
C7 Solvent Violet 13
C8 Solvent Green 5
C9 Disperse Red 54
C10 Disperse Red 167

Example 4

A mix of 100 parts polypropylene granules Shell Grade SY 6500 and 2 parts acrylonitrile-styrene-acrylic ester copolymer (Luran(TM) S 776 S made by B.A.S.F.) plus 0.5% Tinuvin 327 U.V. stabilizer was mixed with 0.5% of the same dyestuffs as used in Examples C1—C10. In each case brightly and transparently coloured fibres resulted after extrusion which had good fastness properties to light, washing and wet and dry rubbing tests.

Example 5

A mix of 100 parts polypropylene and 2 parts butadiene-styrene-polymer ('K' Resin—Phillips Petroleum) plus 0.5% Tinuvin 327 U.V. stabilizer was mixed with 0.5% of the same dyestuffs as used in Examples C1—C10. In each case brightly and transparently coloured fibres resulted after extrusion which had good fastness properties to light, wet and dry rubbing and washing tests.

Example 6

A mix of 100 parts polypropylene and 2 parts polystyrene (Shell K524) plus 0.5% Tinuvin(TM) 327 U.V. stabilizer was mixed with 0.5% of the same dyestuffs as used in Examples C1—C10. In each case brilliantly and transparently coloured fibres resulted after extrusion which had good fastness properties to light, wet and dry rubbing and washing tests.

Example 7

A mix of 100 parts polypropylene and 2 parts polymethylmethacrylate (Plexiglas(TM) 7N) Rohm & Haas plus 0.5% of Tinuvin 327 stabilizer plus 0.5% of the same dyestuffs as used in Examples C1—C10 was extruded into fibres. In each case brightly and transparently coloured fibres resulted after extrusion which has good fastness properties to light, wet and dry rubbing and wash tests.

Example 8

A mix of 100 parts of polypropylene and 2 parts polycarbonate (Makrolon(TM) 2800 made by Bayer) plus 0.5% Tinuvin 327 U.V. stabilizer and 0.5% of the same dyestuffs as used in Examples C1—C10 was extruded into the fibres. In each case brightly and transparently coloured fibres resulted after extrusion which had good fastness properties to light, wet and dry rubbing and wash tests.

Example 9

A mix of 100 parts of polypropylene and 2 parts acrylonitrile-butadienestyrene copolymer (Terluran(TM) 887T) made by B.A.S.F. plus 0.5% Tinuvin 327 U.V. stabilizer and 0.5% of the same dyestuffs as used in Examples C1—C10 was extruded into the fibres. In each case brightly and transparently coloured fibres resulted after extrusion which had good fastness properties to light, wet and dry rubbing and wash tests.

Further, it has been found that a material offered by Diamond Shamrock under the name ECR 130 which is added at an addition rate of 2% to 100 parts polypropylene enables disperse and solvent dyestuffs to be mixed in powder form with the above granules and then to be extruded into coloured fibres. The material ECR 130 which is basically a modified anti-static agent thus enables melt dyed fibres of good fastness properties to be produced using disperse dyestuffs in dried, ground, press-cake form or alternatively solvent dyestuffs in powder form.

Example 10

To 100 parts of polypropylene granules (Shell Grade S76500) was added 2% of granular ECR 130 material supplied by Diamond Shamrock Co., Ltd. To this mix was added 0.5% Tinuvin(TM) 327 U.V. stabilizer produced by Ciba Geigy plus 0.5% in turn of the following disperse dried ground press-cake or solvent dyestuffs according to the following colour index classification. In each case brightly and

transparently coloured fibres were produced with good fastness to light, wet and dry rubbing and wash fastness tests.

List of disperse dyestuffs tested:

C1 Disperse Red 54
C1 Disperse Red 167
C1 Disperse Yellow Foron SE—FL (Sandoz)
C1 Disperse Blue Foron S—BLG (Sandoz)
C1 Disperse Orange Foron S—FL (Sandoz)
C1 Solvent Blue 122
C1 Solvent Green 28
C1 Solvent Yellow 64
C1 Solvent Red 194
C1 Solvent Green 3
C1 Solvent Green 23
C1 Solvent Blue 119

As will be apparent from the above Examples, the dye may be incorporated in the melt to be extruded. This leads to considerable cost saving in relation to conventional post extrusion dyeing.

If opaque coloured fibres are required, then a delustreant e.g. titanium dioxide, may be added to the polyolefin at the extrusion stage. The brightness of the colour is still retained.

Example 11

100 parts of Shell polypropylene Fibre Resin Grade SY61 (MF1 10) were mixed with 0.5% C.1 disperse dyestuff Rd. No. 167 and 0.2% Ciba Geigy U.V. stabilizer Chemasorb(TM) 944.

The resultant mixture was charged into the extruder; the latter being connected to a spinerette and staple fibre drawing, crimping and cutting line. In this instance, the spinning head was maintained at a temperature of 215°C.

It was noted that many fibres broke at the spinerette face and examination of the filaments showed lumps of undissolved dyestuff embedded as agglomerates in the extruded, unstretched filaments. The fibres had a dull appearance, were only semitransparent and a simple rub test with a piece of wet and dry white fabric revealed that the dye was not fast in the polypropylene fibre and could easily be removed. Some of the fibres were tested in a Xenon 150 and had a light fastness on the Blue Wool Scale of 2.

The above experiment was repeated but with the exception that the formulation used in that experiment was added 5% by weight of the linear polycaprolactone polymer with a molcular weight of 45,000 and an OH value mg KOH/g of approximately .2 and a melting point of 60°C.

The resultant filaments were brightly coloured and exhibited a high degree of transparency. No fibres broke at the spinerette face and the stretched fibres had an excellent rub (wet and dry) fastness. After prolonged storage at 20°C (3 months) the fibres were still bright and the dyestuff had not exuded to the surface of the filaments. The fibres were tested in a Xenon(TM) 150 machine and were found to have a light fastness of 6 on the Blue Wool 1—8 Scale.

Example 12

The experiment of Example 11 was repeated but the disperse dyestuff C.1 Red No. 167 used in the Example was substituted by C.1 disperse Red No. 54. Many filaments broke at the spinerette face and with difficulty a sample of stretched filament was produced. The fibre had poor transparency, had a dull surface and many agglomerates of dyestuff could be seen embedded in the filaments. When tested for rub fastness the dyestuff readily could be removed on a piece of white fabric and the light fastness in a Xenon(TM) machine was 2—3.

The further experiment was again repeated with the exception that 5% by weight of a linear polycaprolactone polymer with a molecular weight of 45,000 and an OH value mg KOH/g of approx. 2 and a melting point of 60°C was added to the mix.

On extrusion no filament breakages occurred, the filaments produced had a high transparency and were deeply coloured. Tests showed that the fibre had excellent wet and dry rub fastness and when tested in a Xenon(TM) 150 a light fastness of 7 was obtained.

Example 13

A large batch of 200 kg of Shell polypropylene resin Grade SY 61 was taken to which was added 0.2% by weight of Chemasorb 944 as U.V. stabilizer and 0.5% of a linear polycaprolactone polymer with a molecular weight of 45,000 and an OH value mg KOH/g of approx. 2 and a melting point of 60°C.

The above were tumbled together for a period of 20 minutes in a stainless steel double cone blender. From the above batch, 6 samples were drawn and each mixed with the following dyestuffs as listed in Table 1.

The six separate samples were extruded into fibres as per the conditions of Example 11. In each case highly transparent fibres resulted which were found to have excellent wet and dry rub fastness. No filament

breakages occurred at the spinerette face or in the stretching process which followed. A long term migration test (3 months) showed no tendency for the dyestuffs to bloom or migrate to the surface of the fibres. The resultant fibre was tested for light fastness in a Xenon 150 machine and the results are tabulated in Table 1.

The above procedure was repeated with the six dyestuffs shown in Table 1 but the amount of polycaprolactone polymer was increased to 1% by weight. The results are tabulated in Table 1.

Finally the above procedure was again repeated but the addition rate of the polycaprolactone was 1.5% by weight of the polypropylene. Again the results are tabulated in Table 1. The fibres produced were tested for light fastness in a Xenon 150 machine with the following results.

TABLE 1:

| Dyestuff name: | % Dyestuff: | 0.5% Polycaprolactone light fastness 1—8 BWS | 1.0% Polycap.: lt. fastness 1—8 BWS: | 1.5% Polycap.: lt. fastness 1—8 BWS: |
|---|---|---|---|---|
| C.1 Dis Red 54 | .5% | 5—6 | 6—7 | 6—7 |
| C.1 Dis Red 167 | .5% | 4 | 5 | 5—6 |
| C.1 Dis Yellow | .5% | 4 | 5 | 5+ |
| C.1 Dis Blue | .5% | Less than 1 | Less than 1 | Less than 1 |
| C.1 Dis Yellow | .5% | 4—5 | 4 | 4+ |
| Estofil Green S3 GL | .5% | 5 | 6+ | 6—7 |

In all cases, even when the percentage of polycaprolactone polymer was only 0.5%, the dry and wet rub fastness properties were excellent and when stored for a period of 3 months @ 20°C the dyestuffs did not bloom or migrate from the polypropylene fibres.

Example 14

To 100 parts by weight of Montefina(TM) polypropylene Grade 9060S was added 0.2% Chemasorb(TM) 944, 1% of a linear polycaprolactone polymer having a molecular weight of 550 and an OH value mg KOH/g of 204 and a melting point of 20°C, and 0.5% C.1 disperse Red No. 54. At room temperature the polycaprolactone polymer was in liquid form. The above materials were tumbled for a period of 20 minutes in a double cone blender and then extruded into fibres.

A highly transparent fibre was produced which had good rub fastness (wet and dry) and a light fastness of 6.

Example 15

1% of a branched f≏2.4 polycaprolactone polymer having a molecular weight of 250 and an OH value of mg KOH/g of 540 in liquid form was mixed with 0.5% of C.1 disperse Red 54 to produce a solution. This solution was injected by means of a high pressure metering pump into the mixing section of a fibre extruding machine screw. The metering pump was adjusted so that the percentage of the above was 1.5% expressed as a weight of the natural polypropylene entering the extruder. The resultant filaments were highly transparent and brilliantly coloured red. On testing they were found to have excellent rub fastness (wet and dry) and had a light fastness of 6.

Example 16

To 100 parts by weight of Petrofina polypropylene Grade 9060S was added 1% by weight of a linear polycaprolactone having a molecular weight of 45,000 and an OH value mg KOH/g of approx. 2 and a melting point of 60°C and 0.2% of Ciba Geigy U.V. stabilizer Chemasorb(TM) 944. To this mix, in turn was added, the C.1 solvent colours Yellow 97, Orange 60, Red 162, Green 3, Red 194, Blue 119 and Green 23 and then extruded into fibres using the conditions detailed in Example 1. The resultant fibres were highly transparent and brilliantly coloured, did not break during spinning. The fibres were tested for fastness properties which are shown in Table 2 below:—

TABLE 2

| Dyestuff | Light fastness 1—8 BWS | Wet rub fastness | Dry rub fastness |
|---|---|---|---|
| C1 Solvent Yellow 97 | 3 | Not tested | Not tested |
| C1 Solvent Orange 60 | 4 | Not tested | Not tested |
| C1 Solvent Red 162 | Nil | Not tested | Not tested |
| C1 Solvent Red 194 | 5—6 | Good | Very slight rubbing |
| C1 Solvent Green 3 | 6+ | Excellent | Excellent |
| C1 Solvent Green 23 | 6+ | Excellent | Excellent |
| C1 Solvent Blue 119 | 5—6 | Good | Slight |

Example 17

Example 16 was repeated but the dyestuffs replaced by C.1 Solvent Yellow 134. Opaque fibres were produced even though these dyestuffs give transparent fibres when used for the mass colouration of polyester fibres. Furthermore, the fibres had a greasy and unpleasant handle and would be unsuitable for use in carpets and textile products in general. These fibres were for this reason not tested for light and rub fastness properties. It was not possible to explain this result.

Example 18

The polymer mix used in Example 16 was repeated but in combination with C.1 Solvent Yellow 133, Red 195, Blue 122; Green 28 and Yellow 64. In each case highly transparent shades were produced with no fibre breakages with excellent rub fastness properties. The light fastness properties are listed in Table 3 below:—

TABLE 3

| Dyestuff | Light fastness | Rub fastness |
|---|---|---|
| C1 Solvent Yellow 133 | L1 | Excellent |
| C1 Solvent Red 195 | 3 | Excellent |
| C1 Solvent Blue 122 | 5 | Excellent |
| C1 Solvent Green 28 | 5—6 | Excellent |
| C1 Solvent Yellow 64 | 6—7 | Excellent |

It was noted that in the case of the C1 Yellow 64, the fibres were totally degraded by U.V. radiation during the exposure in the Xenon 150 lamp. As is evident from the above it is only necessary to make a simple light fastness and rub fastness with disperse dyestuffs or solvent dyestuffs to select those which will be suitable for different textile applications.

For instance, for carpeting, light fastness should not be below 5 on the 1—8 BWS.

For furnishing fabrics then light fastness should be 6 and preferably 7 or even 8.

For hand knitting yarns, a fastness of 3 or 4 is considered adequate. However, for this latter application fastness to washing must also be tested for.

Example 19

0.5% of Tinuvin 327 light absorber (Ciba Geigy) is added to 96% of polypropylene homopolymer granules of melt flow index 11 and blended with 4% of an acrylic thermoplastic resin sold under the Trade Name Carboset XL-27 by B. F. Goodrich. To this blend is added 0.5% of a disperse dyestuff in ground press-cake form C.1 Red 167. The blend is tumbled in a double cone mixer for 2 minutes and then extruded into fibres using the equipment above-described.

Highly transparent and brilliantly coloured fibres result which on initially testing have excellent fastness properties.

The example is repeated except the acrylic thermoplastic resin is changed to Grade XL 44 by the same manufacturers. Again highly transparent and brilliantly coloured fibres result.

The example is again re-run but the acrylic resin is replaced by Grade Carboset 525. Again highly transparent and brilliantly coloured fibres result.

The example is further repeated but the acrylic resin is changed to Carboset(TM) resin 526. The resultant fibres again are highly transparent and brilliantly coloured.

Example 20

96% of polypropylene homopolymer of MF1 11 are blended with 4% of thermoplastic polyurethane made by B. F. Goodrich and sold under the Trade Name Estane Grade No. 54351 which is a polyester based compound. To this mix is added 0.5% by weight of U.V. absorber Tinuvin 327 (Ciba Geigy) and 0.5% of a disperse or solvent dyestuff C.1 Red No. 167 was used.

The mix was tumbled in a double cone blender for a period of 20 minutes and then extruded into 16.5 dtex (15 denier) fibres. Highly transparent and brilliantly coloured fibres result.

The example was repeated but the Estane material was replaced by Estane Grade 54625 again highly transparent and brilliantly coloured fibres resulted.

The example was again repeated but the Estane material was substituted by Estane Grade 58277. Again highly transparent and brilliantly coloured fibres resulted.

The example was still again repeated but the Estane material was substituted by a thermoplastics polyurthane (polyether based) Compound Grade Estane 58300. Again highly transparent and brilliantly coloured fibres resulted.

It has therefore, been demonstrated that there is a large selection of transparent dyestuffs which can be applied in the melt to polypropylene fibres to produce very clean, brightly coloured and highly transparent fibres. Such fibres are in ready demand particularly in the Carpet Industry. In only one case i.e. Solvent Yellow 134 was a transparent fibre not obtained.

## Claims

1. A method for producing a uniformly coloured thermoplastic composition including a polyolefin homopolymer, a further polymeric material other than a polyolefin homopolymer in intimate admixture with the polyolefin homopolymer and at least one dye dispersed throughout said material which method comprises dry admixture of the ingredients at a temperature above the softening point of the polyolefin.

2. A method according to claim 1, in which the further polymeric material is an acrylic resin, a polymer of an unsaturated hydrocarbon other than a polyolefin, a polycarbonate, a polyamide, a polyurethane or a polycaprolactone or a mixture thereof.

3. A method according to claim 2, in which the further polymeric material is a polycaprolactone derived from ε-caprolactone.

4. A method according to claim 3, in which the polycaprolactone is one of mean molecular weight of from 250 to 45,000.

5. A method as claimed in claim 4, in which the polycaprolactone is a straight-chain one of a mean molecular weight of substantially 45,000 and has an OH value in terms of mg KOH/g of substantially 0.2 and a melting point of substantially 60°C.

6. A method according to any one of claims 1 to 3, in which the dye to be dispersed throughout said material is a disperse dye or a solvent dye.

7. A method according to any one of the preceding claims, characterised in that the polymeric material is a solid one at room temperature and is extruded along with the dye and the extrusion in solid form is reduced to a finely divided condition and then intimately admixed with the polyolefin and extruded therewith.

## Patentansprüche

1. Verfahren zur Herstellung einer gleichmässig durchgefärbten thermoplastischen Masse aus 1. einem homopolymeren Polyolefin, 2. einem weiteren polymeren Material mit Ausnahme eines homopolymeren Polyolefins, in inniger Mischung mit dem homopolymeren Polyolefin und 3. mindestens einem Farbstoff, der in diesem Material dispergiert ist, dadurch gekennzeichnet, dass die Komponenten bei einer Temperatur oberhalb des Erweichungspunktes des Polyolefins trocken vermischt werden.

2. Verfahren gemäss Anspruch 1, dadurch gekennzeichnet, dass das weitere polymere Material (2) ein Acrylharz, ein polymerisierter, ungesättigter Kohlenwasserstoff mit Ausnahme eines Polyolefins, ein Polycarbonat, ein Polyamid, ein Polyurethan oder ein Polycaprolacton, oder eine Mischung aus solchen Stoffen ist.

3. Verfahren gemäss Anspruch 2, dadurch gekennzeichnet, dass das weitere polymere Material ein Polycaprolacton hergeleitet von ε-Caprolacton ist.

4. Verfahren gemäss Anspruch 3, dadurch gekennzeichnet, dass man Polycaprolacton mit einem mittleren Molekulargewicht von 250 bis 45.000 einsetzt.

5. Verfahren gemäss Anspruch 4, dadurch gekennzeichnet, dass man lineares Polycaprolacton mit einem mittleren Molekulargewicht von etwa 45.000, einer Hydroxylzahl, ausgedrückt in mg KOH/g, von etwa 0,2 und einem Schmelzpunkt von etwa 60°C einsetzt.

6. Verfahren gemäss einem der Ansprüche 1 bis 3, worin der in diesem Material zu dispergierende Farbstoff ein Dispersionsfarbstoff oder ein Lösungsmittelfarbstoff ist.

7. Verfahren gemäss einem der vorhergehenden Ansprüche, dadurch gekennzeichnet, dass ein bei Raumtemperatur festes polymeres Material (2) zugleich mit dem Farbstoff extrudiert, das extrudierte Gemisch in fester Form fein zerteilt, mit dem Polyolefin innig vermischt und extrudiert wird.

**Revendications**

1. Une méthode pour produire une composition thermoplastique colorée uniformément comprenant un homopolymère polyoléfinique, une matière polymère supplémentaire autre qu'un homopolymère polyoléfinique en mélange intime avec l'homopolymère polyoléfinique et au moins un colorant dispersé à travers ladite matière, laquelle méthode comprend l'admixtion à sec des ingrédients à une température supérieure au point de ramollissement de la polyoléfine.

2. Une méthode selon la revendication 1, dans laquelle la matière polymère supplémentaire est une résine acrylique, un polymère d'un hydrocarbure insaturé autre qu'une polyoléfine, un polycarbonate, un polyamide, un polyuréthane ou une polycaprolactone ou un mélange de ces composés.

3. Une méthode selon la revendication 2, dans laquelle la matière polymère supplémentaire est une polycaprolactone dérivée de l'ε-caprolactone.

4. Une méthode selon la revendication 3, dans laquelle la polycaprolactone est une polycaprolactone de poids moléculaire moyen compris entre 250 et 45.000.

5. Une méthode selon la revendication 4, dans laquelle la polycaprolactone est une polycaprolactone à chaîne linéaire d'un poids moléculaire moyen essentiellement de 45.000 et qui a une valeur OH en terme de mg KO/g d'essentiellement 0,2 et un point de fusion d'essentiellement 60°C.

6. Une méthode selon l'une quelconque des revendications 1 à 3, dans laquelle le colorant qui doit être dispersé à travers ladite matière est un colorant de dispersion ou un colorant soluble dans les solvants.

7. Une méthode selon l'une quelconque des revendications précédéntes, caractérisée en ce que la matière polymère est une matière solide à la température ambiante et est extrudée en même temps avec le colorant et le produit d'extrusion sous forme solide est réduit à l'état finement divisé et est ensuite mélangé intimement avec la polyoléfine et extrudé avec celle-ci.